# EUROPÄISCHE PATENTSCHRIFT

(11) **EP 2 241 396 B1**
(45) Veröffentlichungstag und Bekanntmachung des Hinweises auf die Patenterteilung: **16.09.2015**
(21) Anmeldenummer: 10002001.5
(22) Anmeldetag: 26.02.2010
(51) Int. Cl.: B23D 59/00

(54) **Werkzeugmaschine, insbesondere Kappsäge.**
Machine tool, in particular mitre saw.
Machine-outil, notamment scie à onglet.

(30) Priorität: 16.04.2009 DE 202009005541 U
(43) Veröffentlichungstag der Anmeldung: 20.10.2010
(73) Patentinhaber: Metabowerke GmbH, 72622 Nürtingen (DE)
(72) Erfinder: Engelmann, Marcus, 49716 Meppen (DE)
(74) Vertreter: Lorenz, Markus

(56) Entgegenhaltungen:
- WO-A1-2004/011212
- US-A1- 2004 049 927
- US-B2- 6 688 203

## Beschreibung

Die Erfindung betrifft zum einen eine Werkzeugmaschine, insbesondere eine Kappsäge, mit den Merkmalen des Oberbegriffs von Anspruch 1.

Werkzeugmaschinen der in Rede stehenden Art sind Maschinen für die Holzbearbeitung, die Metallbearbeitung oder die Kunststoffbearbeitung. Insbesondere handelt es sich um halbstationäre Werkzeugmaschinen wie Kappsägen, aber auch um Handgeräte wie Handkreissägen o.dgl.

Nachfolgend wird die gesamte Lehre der Erfindung am Beispiel einer Kappsäge als Werkzeugmaschine beschrieben. Das bedeutet aber keine Einschränkung für die Anwendbarkeit der Lehre der Erfindung, Sie ist bei jeder Werkzeugmaschine, die einen Laser-Schnittanzeiger benötigt oder bei der der Einsatz eines Laser-Schnittanzeigers zweckmäßig ist, anwendbar.

Kappsägen der in Rede stehenden Art sind seit Jahrzehnten bekannt (EP-A-1 557 231). Sie werden zur Bearbeitung aller Arten von Werkstoffen eingesetzt. Ein besonderes Anwendungsfeld finden Kappsägen bei der Holzbearbeitung. Sie sind aber auch für die Kunststoffbearbeitung und die Metallbearbeitung zu finden.

Eine typische Kappsäge hat ein um eine Querachse schwenkbar angebrachtes Sägeaggregat, dessen Sägeblatt aus einer angehobenen Ruhestellung in eine abgesenkte Sägestellung und umgekehrt schwenkbar ist. Mit dieser Bewegung des Sägeblattes kann ein auf einer Werkstückauflagefläche eines Trägers befindliches Werkstück abgeschnitten - gekappt - werden.

Kappsägen sind aber nicht nur mit um eine Querachse schwenkbar angebrachtem Sägeaggregat bekannt, sondern auch mit einem in Längsrichtung über die Werkstückauflagefläche ziehbaren Sägeaggregat als sog. Radialarmsägen.

Das Sägeaggregat einer Kappsäge ist normalerweise in Richtung der Ruhestellung vorgespannt. Das geschieht meist durch eine Federanordnung, bei älteren Konstruktionen auch noch durch ein Gegengewicht, Entgegen der Vorspannkraft wird das Sägeaggregat an einem Betätigungshandgriff angefaßt und zum Ausführen des Sägeschnittes nach unten geschwenkt bis das auf der Werkstückauflagefläche befindliche Werkstück vollständig durchtrennt ist. Dabei tritt ein kleines Teilstück des Sägeblattes des Sägeaggregates randseitig in einen Eintauchschlitz in der Werkstückauflagefläche ein.

Die bekannte Kappsäge, von der die Erfindung ausgeht (US-A-2006/0042444), ist eine Kapp-, Gehrungs- und Zugsäge, mit der Kappschnitte, Gehrungsschnitte und Schifterschnitte (Doppel-Gehrungs-Schnitte) ausgeführt werden können. Wegen der außerdem wie bei einer Radialarmsäge realisierten Zugfunktion können die ausgeführten Schnitte länger sein als es der wirksame Schnitthalbmesser des Sägeblattes vorgibt.

Bei der bekannten Kappsäge ist das Sägeaggregat mittels einer Halterung am Träger angebracht. Bei der Kappfunktion wird das Sägeaggregat um eine Querachse aus der angehobenen Ruhestellung in die abgesenkte Sägestellung und umgekehrt geschwenkt.

An der Halterung, meist zwischen Halterung und Träger, ist hier im übrigen eine Neigungsverstellung vorgesehen. Die Neigungsverstellung dient dazu, das Sägeaggregat gegenüber dem Träger um eine in Sägerichtung verlaufende horizontale Schwenkachse schwenken zu können, um eben einen Gehrungsschnitt im gewünschten Gehrungswinkel ausführen zu können.

Bei einer Werkzeugmaschine der in Rede sehenden Art möchte man genau wissen, wo der mittels des Werkzeugs ausgeführte Bearbeitungsvorgang, insbesondere der mittels des Sägeblattes ausgeführte Sägeschnitt im Werkstück liegen wird. Früher zeichnete man eine solche Schnittlinie am Werkstück an. Heutzutage haben Werkzeugmaschinen der in Rede stehenden Art, insbesondere also Kappsägen, regelmäßig einen Laser-Schnittanzeiger. Mittels des Laser-Schnittanzeigers, dessen Laser einen optisch aufgefächerten Laserstrahl erzeugt, wird auf dem Werkstück eine meist rote Linie angezeichnet, die die Lage des späteren Sägeschnittes genau angibt.

Es liegt auf der Hand, daß die Lasereinheit des Laser-Schnittanzeigers genau auf die Sägeschnittebene des Sägeblattes (bzw. die Werkzeug-Bearbeitungsebene des Werkzeugs) einjustiert werden muß.

Bei der bekannten Werkzeugmaschine in Form einer Kappsäge, von der die Erfindung ausgeht, ist der Laser-Schnittanzeiger unmittelbar in der feststehenden Schutzhaube für das Sägeblatt angeordnet. Die Schutzhaube mit ihren Seitenwandungen bildet einen Aufnahmeraum für den darin angeordneten und befestigten Laser-Schnittanzeiger. Eine Verschiebeachse im Aufnahmeraum ist zwischen den Seitenwandungen der Schutzhaube genau quer zur Sägeschnittebene angeordnet. Auf dieser Achse ist ein Tragrahmen in einem ersten Freiheitsgrad linear quer zur Sägeschnittebene verstellbar. Der Tragrahmen selbst trägt die Lasereinheit, die darin in mehreren Freiheitsgraden verstellbar ist.

Zur Verstellung zum einen des Tragrahmens im Aufnahmeraum, zum anderen der Lasereinheit im Tragrahmen dienen mehrere Verstellmittel, die jeweils eine Schraube und eine Vorspannfeder aufweisen. Durch die Vorspannfeder wird das jeweilige System in einer Richtung vorgespannt, dadurch ist das System spielfrei eingerichtet. Durch Verstellen der Schraube bei gleichzeitig wirkender Vorspannfeder erfolgt die Verstellung in den verschiedenen Freiheitsgraden.

Die Betätigung der Verstellmittel erfolgt aus verschiedenen Richtungen. Die Angriffspunkte der verschiedenen Verstellmittel liegen dabei auf verschiedenen Bauteilen der Schutzhaube und des Tragrahmens. Die Führung verschiedener Bauteile auf Führungsachsen führt zu Haftreibung. Durch die vielen verschiedenen Bauteile des Tragrahmens ergeben sich Fertigungstolleranzen, die eine spielfreie Einstellung erschweren. Dabei ist zu berücksichtigen, daß die Umgebungsbedingungen für eine Werkzeugmaschine der in Rede stehenden Art schwierig sind (Staub, Feuchtigkeit).

Bei einer anderen Werkzeugmaschine der in Rede stehenden Art ist der Laser-Schnittanzeiger ebenfalls in der feststehenden Schutzhaube eingebaut. Auch dort gibt es entsprechende Einstellschwierigkeiten (US-A-2003/0233921).

Die zuvor angesprochenen Schwierigkeiten haben dazu geführt, daß man auch mit sehr exakt gefertigten, nachträglich anbaubaren Laser-Schnittanzeigern bei Werkzeugmaschinen der in Rede stehenden Art arbeitet (US-B-6,688,203). Hier kann man zwar Fertigungstoleranzen minimieren, Dafür hat man aber das Problem der ungünstigen Anbringung des Laser-Schnittanzeigers an der Werkzeugmaschine. WO 2004/011212 A1 offenbart den Oberbegriff vom Anspruch 1.

Der Erfindung liegt somit das Problem zugrunde, die bekannte, eingangs erläuterte Werkzeugmaschine, von der die Erfindung ausgeht, hinsichtlich der Anbringung des Laser-Schnittanzeigers zu optimieren. Aufgabe der vorliegenden Erfindung ist auch die Angabe eines Laser-Schnittanzeigers mit optimierter Konstruktion und Justierbarkeit.

Das zuvor aufgezeigte Problem ist nach einer ersten Lehre der vorliegenden Erfindung bei einer Werkzeugmaschine, insbesondere einer Kappsäge, mit den Merkmalen des Oberbegriffs von Anspruch 1 durch die Merkmale des kennzeichnenden Teils von Anspruch 1 gelöst.

Zunächst wird nochmals auf die eingangs gemachte Bemerkung hingewiesen, wonach hier die Lehre der Erfindung anhand einer Kappsäge als bevorzugte Ausführungsform erläutert wird. Die Lehre der Erfindung ist jedoch anwendbar auf alle Werkzeugmaschinen der in Rede stehenden Art, insbesondere also auch auf handgeführte Werkzeugmaschinen wie Handkreissägen o.dgl.

Die Lasereinheit des Laser-Schnittanzeigers erzeugt bei einer Werkzeugmaschine der in Rede stehenden Art normalerweise eine linienförmige Marke auf einem zu bearbeitenden Werkstück, wobei diese linienförmige Marke die Lage des Sägeschnittes im Werkstück angibt.

Während bei der im Stand der Technik bekannten Werkzeugmaschine die Anordnung des Tragrahmens des Laser-Schnittanzeigers auf einer Verschiebeachse aus verschiedenen Gründen problematisch ist, ist bei der erfindungsgemäßen Werkzeugmaschine mit der domartigen Führung für den Steg am Tragrahmen eine sehr zweckmäßige Konstruktion realisiert. Die feststehende Schutzhaube, meist hergestellt aus Aluminium, hat eine hohe Fertigungsgenauigkeit. Im Zuge der Bearbeitung der feststehenden Schutzhaube wird die domartige Führung bzw., wenn mehrere Führungen vorgesehen sind, die domartigen Führungen in einem Zuge mit hergestellt. Diese domartige Führung erlaubt eine formstabile Lagerung des Tragrahmens für den Laser-Schnittanzeiger so, daß dieser Tragrahmen in einem ersten Freiheitsgrad linear quer zur Sägeschnittebene verstellt werden kann, Damit läßt sich die Lasereinheit seitlich an das Werkzeug, insbesondere das Sägeblatt einer Kappsäge, heranrücken.

Besondere Vorteile und Besonderheiten der Lehre und ihrer Ausgestaltungen und Weiterbildung werden im Zusammenhang mit der Erläuterung bevorzugter Ausführungsbeispiele anhand der Zeichnungen näher erläutert.

Die gleichgerichtete Anordnung der verschiedenen Verstellmittel für die unterschiedlichen. Freiheitsgrade erlaubt eine einfache und eindeutige Justierbarkeit des Laser-Schnittanzeigers,

Hier geht es um die besondere Gestaltung des Tragrahmens des Laser-Schnittanzeigers. Die hier beschriebene Konstruktion erlaubt es, den Tragrahmen insgesamt in einem Stück insbesondere aus Kunststoff herzustellen. Die Bewegung der verschiedenen Abschnitte des Tragrahmens ist damit spielfrei und frei von Haftreibung realisiert. Die verformbaren Zwischenbereiche zwischen den Abschnitten übernehmen die Funktion von Gelenken oder Scharnieren bei dem Laser-Schnittanzeiger des Standes der Technik. Insgesamt sind damit herstellungstechnische und einstellungstechnische Vorteile verbunden.

Die zuvor beschriebene Lehre der Erfindung, die den Laser-Schnittanzeiger als solchen betreffen, können auch bei einem als eigenständige komplette Einheit mit einem eigenen Gehäuse ausgeführten Laser-Schnittanzeiger verwirklicht werden (Ansprüche 11 und 12).

Schließlich kann man sich alle Varianten des Laser-Schnittanzeigers auch an einer Werkzeugmaschine der in Rede stehenden Art realisiert vorstellen. Darauf beziehen sich die Ansprüche 13 und 14.

Im folgenden wird nun die Erfindung anhand einer lediglich Ausfuhrungsbeispiele darstellenden Zeichnung näher erläutert, Im Zuge der Erläuterung der Zeichnung werden weitere Vorteile und Besonderheiten der Erfindung in ihren verschiedenen Varianten im Detail angesprochen und erläutert. In der Zeichnung zeigt
- Fig. 1.: in perspektivischer Darstellung ein Ausführungsbeispiel einer erfindungsgemäßen Werkzeugmaschine, hier in Form einer Kappsäge bzw. einer Kapp- und Gehrungssäge,
- Fig. 2: in einer Ansicht schräg von links unten in Fig. 1, wesentlich vergrößert, einen Blick hinein in das Innere der Schutzhaube der Kappsäge aus Fig. 1,
- Fig. 3: in einer Ansicht von innen, ausschnittweise eine Seitenwandung der feststehenden Schutzhaube der Kappsäge aus Fig. 1,
- Fig. 4: einen Laser-Schnittanzeiger für eine Kappsäge gemäß Fig. 1 ohne äußeres Gehäuse in perspektivischer Ansicht,
- Fig. 5: ausschnittweise, in einem Schritt, den Laser-Schnittanzeiger aus Fig. 4,
- Fig. 6: den Laser-Schnittanzeiger aus Fig. 5 in einer Ansicht von unten,
- Fig. 7: in schematischer Darstellung ein weiteres Ausführungsbeispiel eines erfindungsgemäßen Laser-Schnittanzeigers,
- Fig. 8: die Laser-Schnittanzeige aus Fig. 7 in einer perspektivischen Ansicht schräg von hinten in Fig. 7.

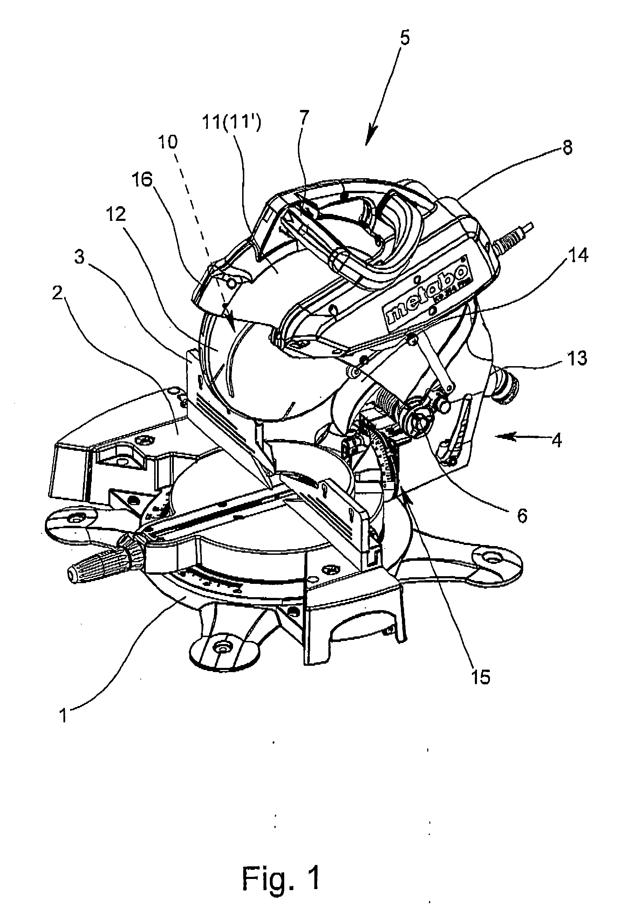

Fig. 1 zeigt eine Kappsäge, genauer gesagt eine Kapp-, Gehrungs- und Zugsäge. Die Lehre der vorliegenden Erfindung ist jedoch generell auf alle Arten von Werkzeugmaschinen mit entsprechenden Laser-Sclmittanzeigem anwendbar, insbesondere auch auf Handgeräte, wie Handkreissägen, Stichsägen o. dgl..

Die in Fig. 1 dargestellte Kappsäge weist zunächst einen Träger 1 auf, der eine Werkstückauflagefläche 2 bildet. Das rückwärtige Ende der Werkstückauflagefläche 2 bildet hier eine Anschlagschiene 3, an der ein Werkstück, beispielsweise eine Holzleiste; angelegt werden kann. Am Träger 1 ist eine Halterung 4 angebracht, die rückwärtig hinter der Werkstückauflagefläche 2 liegt.

An der Halterung 4 oberhalb des Trägers 1 angebracht ist ein Sägeaggregat 5. Dieses ist im dargestellten Ausführungsbeispiel um eine Querachse 6 schwenkbar und befindet sich oberhalb der Werkstückauflagefläche 2.

Bei einer Radialarmsäge entfiele die Querachse. Das Sägeaggregat würde hier an Zugstangen gezogen, die auslegerartig über die Werkstückauflagefläche ragen.

Bei der dargestellten Kappsäge wird das Sägeaggregat 5 um die Querachse 6 aus einer angehobenen Ruhestellung, die in Fig. 1 zu erkennen ist, in eine abgesenkte Sägestellung, die hier nicht dargestellt ist, und umgekehrt geschwenkt, Das Sägeaggregat 5 ist dabei in Richtung der Ruhestellung, also nach oben hin vorgespannt, insbesondere durch eine Feder. Dadurch kehrt das Sägeaggregat 5, wenn man es losläßt, von selbst wieder in die angehobene Ruhestellung zurück.

Das Sägeaggregat 5 weist auf,
- einen Betätigungshandgriff 7,
- einen elektrischen Antriebsmotor 8,
- ein vom elektrischen Antriebsmotor 8 angetriebenes, auf einer Welle gelagertes Sägeblatt 10 (verdeckt durch die Schutzhauben 11, 12),
- eine das Sägeblatt 10 von oben her etwa über die Hälfte abdeckende feststehende Schutzhaube 11,
- eine Pendelschutzhaube 12, die in der in Fig. 1 dargestellten Ruhestellung den unteren Teil des Zahnkranzes des Sägeblattes 10 abdeckt,
- einen Absaugstutzen 13 einer Staubfangvorrichtung und
- eine im Bereich zwischen der Halterung 4 und der Welle unterhalb der feststehenden Schutzhaube 11 angeordnete Staubfanghaube 14.

Die dargestellte Kappsäge hat neben der zuvor bereits beschriebenen Kappfunktion eine Gehrungsfunktion. Es handelt sich also zunächst bereits um eine Kapp- und Gehrungssäge.

Zur Realisierung der Gehrungsfunktion weist die Kappsäge eine Neigungsverstellung 15 auf, mit der sich das Sägeaggregat 5 gegenüber dem Träger 1 um eine horizontale Neigungs-Schwenkachse schwenken läßt. Diese kann körperlich oder auch nur geometrisch, beispielsweise durch eine kulissenartige Gestaltung ersetzt, vorhanden sein.

Nicht dargestellt ist in der Zeichnung, daß eine Kappsäge der in Rede stehenden Art neben einer Kappfunktion und einer Gehrungsfunktion auch eine Zugfunktion haben kann. Grundsätzlich darf dazu auf die bereits eingangs erwähnte DE-U-203 13 885 verwiesen werden. Die Lehre der Erfindung gilt auch für eine Kappsäge mit Zugfunktion.

In Fig. 1 erkennt man nun vorn links an der feststehenden Schutzhaube 11 der hier als Kappsäge beispielhaft dargestellten Werkzeugmaschine eine Aufweitung, in der sich ein Aufnahmeraum 16 für einen darin angeordneten und befestigten, jedoch in Fig. 1 nicht dargestellten Laser-Schnittanzeiger 17 befindet. Man kann sich gut vorstellen, wie sich der Laserstrahl, aufgefächert in der Sägeschnittebene, nach unten zum Werkstück hin erstreckt und dort die Lage des einzubringenden Sägeschnittes auf dem Werkstück markiert.

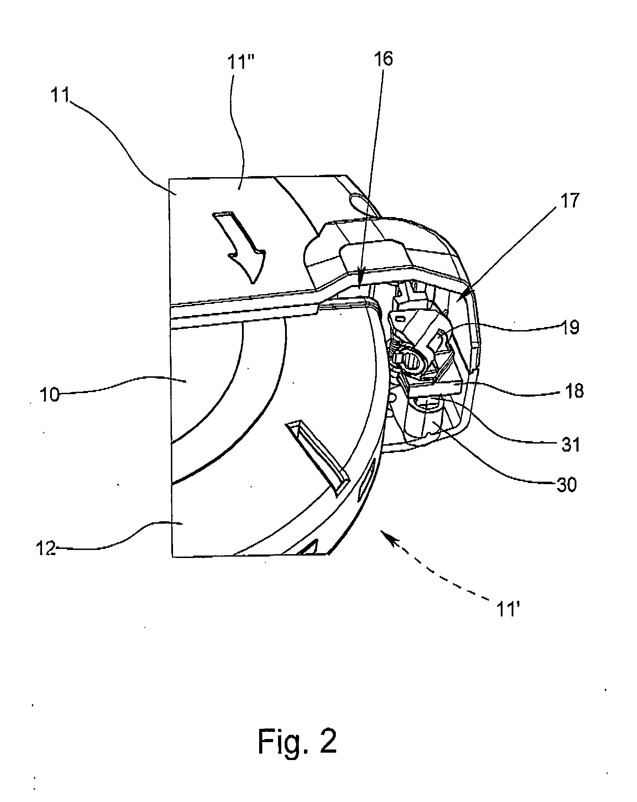

Um die zuvor angesprochene Markierung präzise und zutreffend vornehmen zu können, muß der Laser-Schnittanzeiger 17 genau justiert werden. Fig. 2 zeigt einen Blick von links unten in Fig. 1 hinein in die feststehende Schutzhaube 11. Man erkennt die beiden Seitenwandungen 11', 11" der Schutzhaube 11, zwischen denen der Aufnahmeraum 16 für den darin angeordneten und befestigten Laser-Schnittanzeiger 17 gebildet ist. Bereits in Fig. 2 kann man erkennen, daß der Laser-Schnittanzeiger 17 einen Tragrahmen 18 und eine darin in mehreren Freiheitsgraden verstellbare Lasereinheit 19 aufweist.

Eine wesentliche Verstellrichtung der Lasereinheit 19 ist die Richtung quer zur Sägeschnittebene. Damit wird die Lasereinheit 19 zunächst einmal korrekt auf die Sägeschnittebene ausgerichtet. Dieses ist der erste Freiheitsgrad für die Einstellung der Lasereinheit 19. Bei einem Kreissägeblatt als Werkzeug 10 definiert das Kreissägeblatt die Sägeschnittebene.

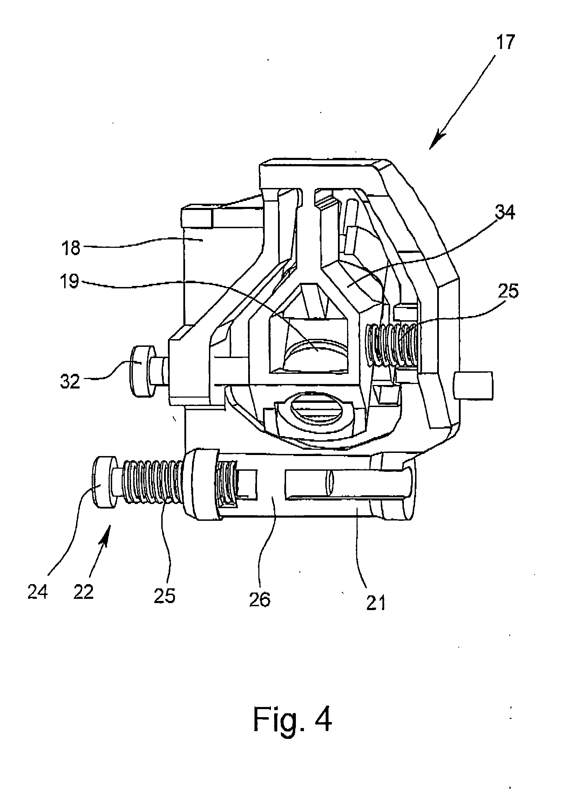

Fig. 2 und Fig. 4 zeigen im Zusammenhang, daß die Laserstrahlung der Lasereinheit 19 durch Verstellung des Tragrahmens 18 im Aufnahmeraum 16 - im ersten Freiheitsgrad - linear quer zur Sägeschnittebene - und durch Verstellung der Lasereinheit 19 im Tragrahmen 18 in weiteren Freiheitsgraden auf die Sägeschnittebene ausrichtbar ist.

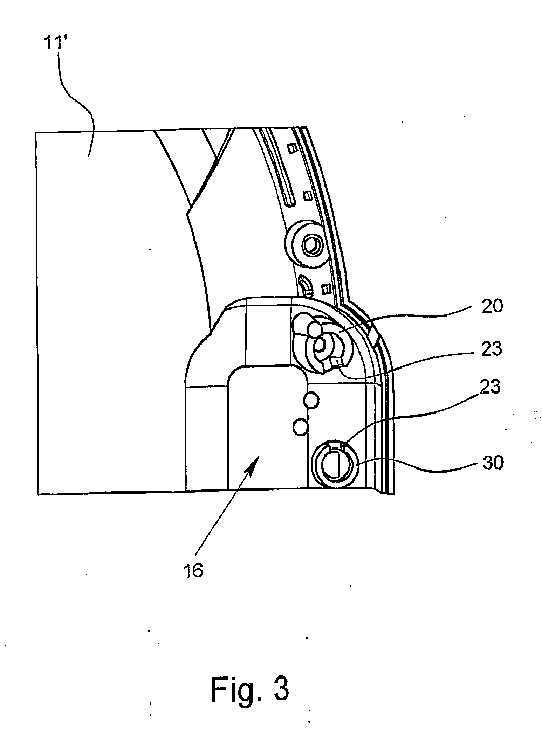

Fig. 2 und Fig. 3 im Zusammenhang lassen nun die besondere konstruktive Konzeption der Lehre erkennen, die darin liegt, daß an zumindest einer Seitenwandung 11' der Schutzhaube 11 innen zumindest eine domartige, quer zur Sägeschnittebene zur anderen Seitenwandung 11' hin ausgerichtete Führung 20 angeordnet ist, daß am Tragrahmen 18 ein in der Führung 20 paßgenau laufendes bewegliches Element, insbesondere ein darin laufender Steg 21, angeordnet ist und daß durch Verstellen des Stegs 21 in der Führung 20 mittels eines ersten Verstellmittels 22 der Tragrahmen 18 im ersten Freiheitsgrad linear quer zur Sägeschnittebene verstellbar ist. Das erste Verstellmittel 22 ist in Fig. 4 identifiziert. Es dient der Verstellung im ersten Freiheitsgrad.

An der ohnehin hochpräzise aus Leichtmetall oder widerstandsfähigem Kunststoff gefertigten Schutzhaube 11 ist die Führung 20 für den Steg 21 am Tragrahmen 18 unmittelbar domartig ausgeformt mit hoher Fertigungsgenauigkeit. Der Steg 21 kann in der Führung 20 erstklassig gleiten. Die Verstellung im ersten Freiheitsgrad ist optimiert.

Nach bevorzugter Lehre der Erfindung ist vorgesehen, daß die domartige Führung 20 einen seitlichen Schlitz 23 aufweist und der Steg 21 durch den Schlitz 23 hindurch greift. Den Schlitz 23 erkennt man in Fig. 3 besonders gut. Der Schlitz 23 erlaubt es, den Steg 21 mit dem Tragrahmen 18 im übrigen über eine leistenartige, langgestreckte Verbindung sicher und verformungssteif zu verbinden.

In Fig. 2 ist das erste Verstellmittel 22 von der domartigen Führung 20 für den Steg 21 verdeckt. In Fig. 4 ist es jedoch gut zu erkennen. Dort ist die domartige Führung 20 weggelassen, weil die Schutzhaube 11 überhaupt nicht dargestellt ist.

Vorgesehen ist, daß das erste Verstellmittel 22 eine an einer Seitenwandung, vorzugsweise an der anderen Seitenwandung 11', drehgelagerte Schraube 24 und vorzugsweise eine Vorspannfeder 25 aufweist, wobei die Schraube 24 in ein Gewinde am Steg 21 eingreift. In Fig. 4 links zwischen dem Kopf der Schraube 24 und der rechts davon erkennbaren Vorspannfeder 25, die hier als Schraubendruckfeder ausgeführt ist, erkennt man einen Abstand. Hier befindet sich normalerweise die Seitenwandung 11' der Schutzhaube 11. Die Vorspannfeder 25 liegt also, wenn man Fig. 4 betrachtet, von rechts innen an der Seitenwandung 11' an. Sie ist rechts am Steg 21 abgestützt. Die Schraube 24 greift in ein Gewinde rechts am Steg 21 ein. Dieses Gewinde ist hier verdeckt. Es befindet sich im Tragring 26 des Stegs 21. Durch Drehen der Schraube 24 kann der Steg 21 in der Führung 20, wenn man von Fig. 4 ausgeht, nach rechts und links verschoben werden. Damit wird der Tragrahmen 18 insgesamt im ersten Freiheitsgrad quer zur Sägeschnittebene verstellt.

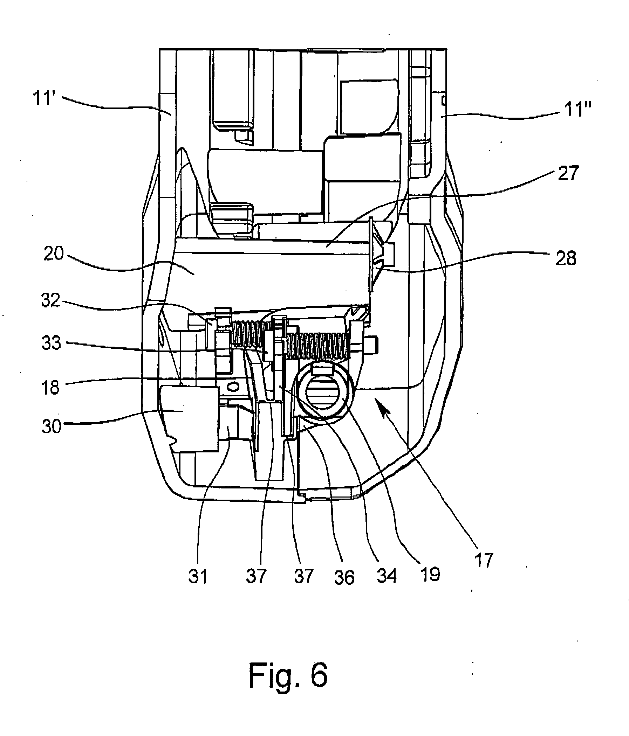

Eine besondere konstruktive Ausgestaltung der Erfindung kann man in diesem Zusammenhang aus Fig. 6 entnehmen. In Fig. 6, kann man oben erkennen, daß der Verschiebeweg des Tragrahmens 18 weg von der ersten Seitenwandung 11' begrenzt ist und daß, vorzugsweise, dazu an der ersten Seitenwandung 11' ein zur Führung 20 parallel verlaufender Träger 27 mit einem darauf angebrachten Begrenzungsanschlag 28 für den Verstellweg des Stegs 21 in der Führung 20 vorgesehen ist. Hier ist an der Seitenwandung 11' der Träger 27 einstückig angeformt, Auf diesem sitzt rechts als Begrenzungsanschlag 28 ein Sprengring, der verhindert, daß der Steg 21 nach rechts aus der Führung 20 herausgedrückt wird.

Aus Fig. 3 läßt sich entnehmen, daß im dargestellten Ausführungsbeispiel an der Seitenwandung 11' eine zweite, von der ersten Führung 20 seitlich beabstandete domartige Führung 30 und am Tragrahmen 18 ein zweites, in der zweiten Frührung 30 paßgenau laufendes bewegliches Element, auch hier nach bevorzugter Ausführung ein entsprechender Steg 31, angeordnet sind. Den weiteren Steg 31 erkennt man angedeutet z.B. in Fig. 6, Insgesamt ist das also eine zweifache Führung des Tragrahmens 18 linear quer zur Sägeschnittebene. Der zweiten Führung 30 ist aber kein weiteres Verstellmittel zugeordnet.

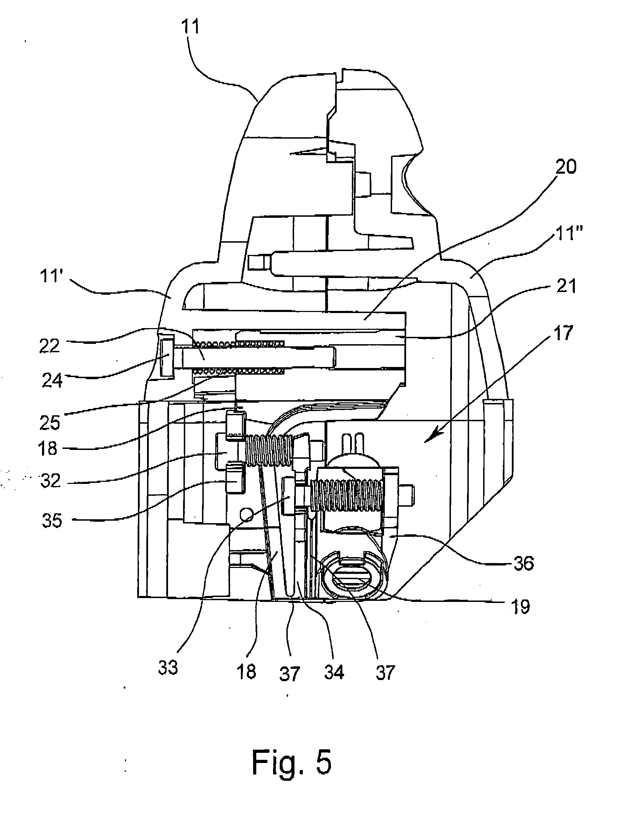

Insbesondere in Fig. 4 und Fig. 5 der Zeichnung, die zwei etwas unterschiedliche Ausführungsbeispiele der Erfindung darstellen, erkennt man, daß zur Verstellung der Lasereinheit 19 im Tragrahmen 18 weitere Verstellmittel 32, 33 vorgesehen sind und daß die weiteren Verstellmittel 32, 33 i.w. parallel zum ersten Verstellmittel 22 ausgerichtet und von derselben Seite der Schutzhaube 11 aus wie das erste Verstellmittel 22 betätigbar sind

Vom Grundprinzip her sind die Verstellmittel 32, 33 genau so aufgebaut wie das erste Verstellmittel 22, nämlich mit einer Schraube und einer Vorspannfeder. Diese Teile haben daher hier keine eigenen Bezugszeichen erhalten. In jedem Fall ist diese Form der Verstellung, die ja im Stand der Technik auch verwirklicht wird, zweckmäßig, weil sie vom Ansatz her spielfrei realisierbar ist.

Bereits zuvor i.V.m. Fig. 4 ist darauf hingewiesen worden, daß nahe dem Kopf der jeweiligen Schraube 24 die Lagerung der Schraube 24 am Lagerpunkt erfolgt. Besonders gut sieht man das in Fig. 5. Dadurch, daß die Lagerung der jeweiligen Schraube 24 der Verstellmittel 22, 32, 33 nahe ihrem Kopf realisiert ist, werden die auftretenden Kräfte unmittelbar in das jeweilige Bauteil eingeleitet. Bei Kräften auf das jeweilige Verstellmittel 22, 32, 33 beim Verstellen verlagern sich andere Elemente kaum oder jedenfalls nur elastisch rückstellend. Es gibt keine Kumulierung von Kräften bzw. kein späteres "Setzen" der Verstellmittel 22, 32, 33. Da die Verstellmittel 22, 32, 33 durch Realisierung der Vorspannfedem 25 jeweils auf Zug arbeiten, gibt es immer eine spielfreie Einstellung.

Dadurch, daß im dargestellten Ausfübrungsbeispiel alle Verstellmittel 22, 32, 33 von ein und derselben Seite der Schutzhaube 11 bzw. des Tragrahmens 18 aus betätigbar sind, ist die Zugänglichkeit der Verstellmittel 22, 32, 33 günstig, einfach und leicht erlernbar.

Fig. 4 zeigt einen kompletten Laser-Schnittanzeiger 17 mit seinem Tragrahmen 18 und der Lasereinheit 19, der allerdings noch in ein Gehäuse oder einen anderweitig realisierten Aufnahmeraum 16, hier eben in die feststehende Schutzhaube 11, eingebaut werden muß. Man erkennt hier im Tragrahmen 18 einen vorzugsweise aus Kunststoff einstückig hergestellten Tragabschnitt 34 für die Lagereinheit 19. Der Tragabschnitt 34 ist in Fig. 4 oben am Tragrahmen 18 aufgehängt. Das zweite Verstellmittel 32, das in Fig. 4 links zu erkennen ist, schiebt den Tragabschnitt 34 entgegen der Federkraft der zugeordneten Vorspannfeder 25, die in Fig. 4 rechts zu erkennen ist, wobei sich das Kunststoffmaterial des Tragabschnitts 34 an der Engstelle nahe der Aufhängung etwas verformt.

Die zuvor beschriebene Konstruktion und der in Fig. 4 dargestellte Laser-Schnittanzeiger 17 insgesamt kann auch in einem eigenen, autarken Gehäuse angeordnet sein. Er würde dann als Anbauteil an einer Werkzeugmaschine angebracht werden. Darauf wird später noch eingegangen. Für einen solchen "autarken" Laser-Schnittanzeiger 17 gelten im Grundsatz die gleichen Überlegungen, die zuvor bereits dargestellt worden sind.

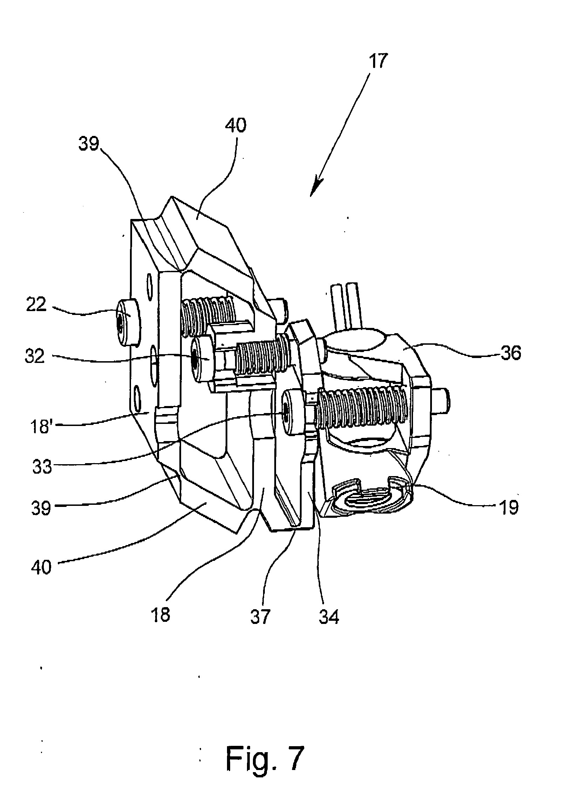

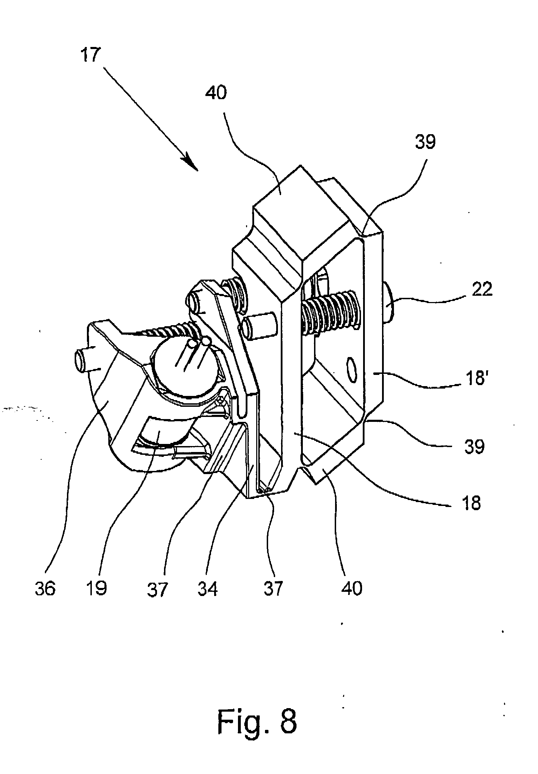

Das in Fig. 5 und 6 dargestellte Ausführungsbeispiel eines Laser-Schnittanzeigers 17 und das weitere, davon abgeleitete dritte Ausführungsbeispiel gemäß Fig. 7 und 8 hat nun eine weitere Besonderheit. Es ist vorgesehen, daß der Tragrahmen verschiedene gegeneinander verstellbare Abschnitte 34, 36 aufweist, die über verformbare Zwischenbereiche 37, insbesondere in Form von Sollbiegestellen, Filmscharnieren o.dgl., miteinander verbunden sind und daß ein Verstellmittel 32, 33 jeweils zwei über mindestens einen Zwischenbereich 37 miteinander verbundene Abschnitte 18, 34, 34, 36 miteinander verbindet bzw. gegeneinander verstellt. Der erste Abschnitt, gewissermaßen der feststehende Basisabschnitt, ist der Tragrahmen 18 als solcher. Dieser Basisabschnitt hat daher in Fig. 5 auch das Bezugszeichen 18. Dieser Basisabschnitt ist einstückig ausgeführt mit dem Steg 21 des Tragrahmens 18, der in Fig. 5 oben in der Führung 20 linear geführt wird. In Fig. 5 oben erkennt man das erste Verstellmittel 22.

Unterhalb des ersten Verstellmittels 22 sieht man in Fig. 5 das zweite Verstellmittel 32 wieder mit Schraube und Vorspannfeder. Dieses befindet sich zwischen dem Basisabschnitt des Tragrahmens 18 und einem dagegen verstellbaren Abschnitt 34. Dieser ist zuvor auch als Tragabschnitt 34 bezeichnet worden. Das Gewinde für die Schraube des zweiten Verstellmittels 32 befindet sich hier im Tragabschnitt 34. Die Fassung am Basisabschnitt des Tragrahmens 18 dient als Widerlager 35 für das zweite Verstellmittel 32.

Der verformbare Zwischenbereich 37 ist hier als Filmscharnier bzw. als Sollbiegestelle ausgeführt. Der Basisabschnitt des Tragrahmens 18 und der Tragabschnitt 34 sind also einstückig miteinander ausgeführt unter Einschluß des Zwischenbereichs 37.

Am Tragabschnitt 34 ist wiederum über einen Zwischenbereich 37 in Form eines Filmscharniers einstückig angeschlossen ein weiterer Abschnitt 36, auch als Halteabschnitt 36 bezeichnet. Hier findet sich das dritte Verstellmittel 33 wiederum mit Schraube und Vorspannfeder, wobei hier das Widerlager vom Tragabschnitt 34 gebildet ist und das Gewinde für die Schraube sich rechts im Halteabschnitt 36 befindet (siehe auch Fig. 6).

Mit dieser Konstruktion ist es möglich, daß der Tragrahmen 18, vorzugsweise einstückig und vorzugsweise aus Kunststoff, in einem formtechnischen Herstellungsverfahren hergestellt ist. Insbesondere wird sich eine einstückige Herstellung im Spritzgußverfahren aus einem thermoplastischen, gegebenenfalls faserverstärkten Kunststoff empfehlen.

Das in Fig. 5 und 6 dargestellte Ausführungsbeispiel zeichnet sich ferner dadurch aus, daß der Tragrahmen 18 einen die Lasereinheit 19 tragenden Abschnitt 36 aufweist, der um einen asymmetrisch angeordneten Zwischenbereich 37 schwenkbar oder quasi-schwenkbar ist.

Fig. 5 zeigt die lineare Einstellung in dem ersten Freiheitsgrad mittels des ersten Verstellmittels 22. Hier wird, geführt von der ersten Führung 20 und der zweiten Führung 30, der Tragrahmen 18 insgesamt recht/links verstellt. Damit verstellt man die aufgefächerte Laserstrahlung seitlich relativ zum Sägeblatt 10.

In Fig. 5 und 6 ist auch die Kippbewegung des Tragabschnitts 34 gegenüber dem Basisabschnitt des Tragrahmens 18 mittels des zweiten Verstellmittels 32 nachvollziehbar. Das ist der zweite Freiheitsgrad. Mit ihm wird die Neigung des Laser-Fächerstrahls gegenüber der Sägeschnittebene eingestellt.

In Fig. 5 und 6 ist schließlich die oben zuletzt erläuterte Schwenkung der Lasereinheit 19 selbst um den in Fig. 6 rechts dargestellten verformbaren Zwischenbereich 37 mittels des dritten Verstellmittels 33 dargestellt. Dieser verläuft hier in einem Winkel von vorzugsweise etwa 45° relativ zum Zwischenbereich 37 zwischen den Abschnitten 18, 34, Damit wird die Ausrichtung des Laser-Fächerstrahls relativ zur Sägeschnittebene durch eine Schwenkung der Lasereinheit 19 einjustiert. Genauer gesagt ist das hier eine Art Bogenbewegung, in der sich Schwenkung und Translation überlagern.

Man erkennt an der zuvor gegebenen Erläuterung, daß hier alle Einstellachsen durch die verformbaren Zwischenbereiche 37 realisiert sind, so daß sich keine Reibung durch Dreh- oder Schwenkbewegungen ergibt. Der Tragrahmen 18 des Laser-Schuittanzeigers 17 kann insgesamt im formtechnischen Herstellungsverfahren, insbesondere als Kunststoff-Spritzgußteil hergestellt werden. Die verformbaren Zwischenbereiche 37 sind Materialengstellen bzw. Filmscharniere. Alle Verstellmittel 22, 32, 33 haben mehr oder weniger dieselbe Betätigungsrichtung, Das erlaubt eine intuitive, schnell erlernbare Justierung. Alle Verstellmittel 22, 32, 33 sind einseitig auf Zug beansprucht, die Vorspannfedern 25 stellen die Schrauben 24 jeweils in eine Endstellung zurück.

Insgesamt ergibt sich eine einfache, wenige Bauteile aufweisende, sehr gut justierbare Konstruktion.

In einem weiteren Ausführungsbeispiels, das in einer schematischen Darstellung in Fig. 7 und 8 dargestellt worden ist, kann man das erfindungsgemäße System noch weiter dadurch perfektionieren, daß der Tragrahmen 18 zwei über Parallelogrammarme 40 miteinander verbundene Abschnitte 18, 18' aufweist. Hier ist die Verschiebeführung für die Verstellung im ersten Freiheitsgrad durch eine Parallelogrammverstellung mittels verformbarer Zwischenbereiche 39 ersetzt. Fig. 7 zeigt eine perspektivische Darstellung der Parallelogrammkonstruktion schräg von oben gesehen, Fig. 8 zeigt den Tragrahmen 18 aus Fig. 7 von hinten gesehen. Man erkennt im Zusammenhang die verschiedenen Zwischenbereiche 37, 39 sehr gut.

Die zuvor beschriebenen Ausführungsbeispiele eines Laser-Schnittanzeigers 17 lassen sich sowohl innerhalb einer feststehenden Schutzhaube einer Werkzeugmaschine in einem dortigen Aufnahmeraum 16 einbauen als auch mit einem eigenen Gehäuse versehen und dann als komplette Einheit nachträglich an einer Werkzeugmaschine anbauen.

Die einzelnen Lehren der Erfindung lassen sich im übrigen auch umfassend miteinander kombinieren.

## Patentansprüche

1. Werkzeugmaschine, insbesondere Kappsäge,
mit einem Werkzeug (10), insbesondere einem Sägeblatt (10), und mit einer feststehenden Schutzhaube (11) für das Werkzeug (10),
wobei das Werkzeug (10) eine Hauptebene, also insbesondere das Sägeblatt (10) eine Sägeschnittebene, definiert,
wobei die Schutzhaube (11) mit ihren Seitenwandungen (11', 11") einen Aufnahmeraum (16) für einen darin angeordneten und befestigten Laser-Schnittanzeiger (17) bildet,
wobei der Laser-Schnittanzeiger (17) einen Tragrahmen (18) und eine darin in mehreren Freiheitsgraden verstellbare Lasereinheit (19) aufweist,
wobei der Tragrahmen (18) im Aufnahmeraum (16) in einem ersten Freiheitsgrad linear quer zur Sägeschnittebene verstellbar ist und
wobei die Laserstrahlung der Lasereinheit (19) durch Verstellung des Tragrahmens (18) im Aufnahmeraum (16) und Verstellung der Lasereinheit (19) im Tragrahmen (18) auf die Sägeschnittebene ausrichtbar ist,
**dadurch gekennzeichnet,**
**daß** an zumindest einer Seitenwandung (11') der Schutzhaube (11) innen zumindest eine domartige, quer zur Sägeschnittebene zur anderen Seitenwandung (11") hin ausgerichtete Führung (20) mit hohlzylindrischer Grundform angeordnet ist,
**daß** am Tragrahmen (18) ein in der Führung (20) paßgenau laufendes bewegliches Element, insbesondere ein Steg (21), angeordnet ist und
**daß** durch Verstellen des beweglichen Elements, insbesondere des Stegs (21), in der Führung (20) mittels eines ersten Verstellmittels (22) der Tragrahmen (18) im ersten Freiheitsgrad linear quer zur Sägeschnittebene verstellbar ist.

2. Werkzeugmaschine nach Anspruch 1, **dadurch gekennzeichnet,**
**daß** die domartige Führung (20) einen seitlichen Schlitz (23) aufweist und das bewegliche Element, insbesondere der Steg (21), durch den Schlitz (23) hindurch greift, und/oder
**daß** das erste Verstellmittel (22) eine an einer Seitenwandung (11', 11"), vorzugsweise an der anderen Seitenwandung (11"), drehgelagerte Schraube (24) und vorzugsweise eine Vorspannfeder (25) aufweist, wobei die Schraube (24) in ein Gewinde am beweglichen Element, insbesondere am Steg (21), eingreift.

3. Werkzeugmaschine nach einem der Ansprüche 1 oder 2, **dadurch gekennzeichnet,**
**daß** der Verschiebeweg des Tragrahmens (18) weg von der ersten Seitenwandung (11') begrenzt ist und
**daß**, vorzugsweise, dazu an der ersten Seitenwandung (11') ein zur Führung (20) parallel verlaufender Träger (27) mit einem darauf angebrachten Begrenzungsanschlag (28) für den Verstellweg des beweglichen Elements, insbesondere des Stegs (21), in der Führung (20) vorgesehen ist.

4. Werkzeugmaschine nach einem der Ansprüche 1 bis 3, **dadurch gekennzeichnet,**
**daß** an der Seitenwandung (11') eine zweite, von der ersten Führung (20) seitlich beabstandete domartige Führung (30) und am Tragrahmen (18) ein zweites, in der zweiten Führung (30) paßgenau laufendes bewegliches Element, insbesondere ein Steg (31), angeordnet sind.

5. Werkzeugmaschine nach einem der Ansprüche 1 bis 4, **dadurch gekennzeichnet,**
**daß** zur Verstellung der Lasereinheit (19) im Tragrahmen (18) weitere Verstellmittel (32, 33) vorgesehen sind und
**daß** die weiteren Verstellmittel (32, 33) i.w. parallel zum ersten Verstellmittel (22) ausgerichtet und von derselben Seite der Schutzhaube (11) wie das erste Verstellmittel (22) betätigbar sind,
wobei, vorzugsweise, jedes weitere Verstellmittel (32, 33) eine am Tragrahmen (18) drehgelagerte Schraube und vorzugsweise eine Vorspannfeder aufweist, wobei die Schraube in ein Gewinde an einem Gegenstück des Tragrahmens (18) eingreift.

6. Werkzeugmaschine nach Anspruch 2 und gegebenenfalls einem der Ansprüche 3 bis 5, **dadurch gekennzeichnet,**
**daß** die Schraube (24) des Verstellmittels (22, 32, 33) nahe ihrem Kopf drehgelagert ist.

7. Werkzeugmaschine nach einem der Ansprüche 1 bis 6, **dadurch gekennzeichnet, daß** die Schutzhaube (11) aus Leichtmetall, insbesondere aus einem Aluminiummaterial, besteht.

## Claims

1. Machine tool, in particular crosscut saw,
having a tool (10), in particular a saw blade (10), and having a fixed protective hood (11) for the tool (10), wherein the tool (10) defines a main plane, i.e. in particular the saw blade (10) defines a saw kerf plane, wherein the protective hood (11) forms, with its side walls (11', 11"), a receiving space (16) for a laser cut indicator (17) that is arranged and fastened therein,
wherein the laser cut indicator (17) has a support frame (18) and a laser unit (19) that is adjustable therein in a number of degrees of freedom,
wherein the support frame (18) is adjustable in the receiving space (16) in a first degree of freedom in a linear manner transversely to the saw kerf plane, and wherein the laser radiation of the laser unit (19) is orientable onto the saw kerf plane by adjustment of the support frame (18) in the receiving space (16) and adjustment of the laser unit (19) in the support frame (18).
**characterized**
**in that** at least one dome-like guide (20) having a hollow-cylindrical basic shape is arranged on the inside of at least one side wall (11') of the protective hood (11), said dome-like guide being oriented transversely to the saw kerf plane in the direction of the other side wall (11"),
**in that** a movable element, in particular a bar (21), that runs with a precise fit in the guide (20) is arranged on the support frame (18), and
**in that**, by adjustment of the movable element, in particular of the bar (21), in the guide (20) by means of a first adjusting means (22), the support frame (18) is adjustable in the first degree of freedom in a linear manner transversely to the saw kerf plane.

2. Machine tool according to Claim 1, **characterized**
**in that** the dome-like guide (20) has a lateral slot (23) and the movable element, in particular the bar (21), reaches through the slot (23), and/or
**in that** the first adjusting means (22) has a screw (24) rotatably mounted on a side wall (11', 11"), preferably on the other side wall (11"), and preferably a pretensioning spring (25), wherein the screw (24) engages in a thread on the movable element, in particular on the bar (21).

3. Machine tool according to either of Claims 1 and 2, **characterized**
**in that** the displacement travel of the support frame (18) away from the first side wall (11') is limited and in that, preferably, to this end a carrier (27) extending parallel to the guide (20) and having a limit stop (28), attached to said carrier (27), for the adjustment travel of the movable element, in particular of the bar (21), in the guide (20) is provided on the first side wall (11').

4. Machine tool according to one of Claims 1 to 3, **characterized**
**in that** a second dome-like guide (30), spaced apart laterally from the first guide (20), is arranged on the side wall (11'), and a second movable element, in particular a bar (31), that runs with a precise fit in the second guide (30) is arranged on the support frame (18).

5. Machine tool according to one of Claims 1 to 4, **characterized**
**in that** further adjusting means (32, 33) are provided for the adjustment of the laser unit (19) in the support frame (18), and
**in that** the further adjusting means (32, 33) are oriented substantially parallel to the first adjusting means (22) and are actuable from the same side of the protective hood (11) as the first adjusting means (22), wherein, preferably, each further adjusting means (32, 33) has a screw rotatably mounted on a support frame (18), and preferably a pretensioning spring, wherein the screw engages in a thread on a counter piece of the support frame (18).

6. Machine tool according to Claim 2 and optionally one of Claims 3 to 5, **characterized**
**in that** the screw (24) of the adjusting means (22, 32, 33) is rotatably mounted close to the head of said screw (24).

7. Machine tool according to one of Claims 1 to 6, **characterized**
**in that** the protective hood (11) consists of light metal, in particular of an aluminium material.

## Revendications

1. Machine-outil, en particulier scie à onglet,
comportant un outil (10), notamment une lame de scie (10), et un capot de protection fixe (11) pour l'outil (10),
dans lequel l'outil (10) définit une surface plane principale, c'est-à-dire que la lame de scie (10) définit une surface plane de coupe de sciage,
dans lequel le capot de protection (11) forme avec ses parois latérales (11', 11 ") un espace récepteur (16) pour un indicateur de coupe à laser (17) qui y est logé et fixé,
dans lequel l'indicateur de coupe à laser (17) comporte un cadre porteur (18) et une unité laser (19), agencée pour être réglable selon différents degrés de liberté, qui y est monté,
dans lequel le cadre porteur (18) qui se trouve dans l'espace récepteur (16), est déplaçable linéairement, avec un premier degré de liberté, transversalement par rapport à la surface plane de coupe de sciage, et
dans lequel le rayonnement laser de l'unité laser (19) peut être ajusté à la surface plane de coupe de sciage par le déplacement du cadre porteur (18) dans l'espace récepteur (16) et le déplacement de l'unité laser (19) dans le cadre porteur (18),
**caractérisée en ce que**,
à l'intérieur d'au moins une paroi latérale (11') du capot de protection (11), un guidage (20) en dôme, ayant une forme de base cylindrique creuse est monté transversalement par rapport à la surface de coupe de sciage vers l'autre paroi latérale (11 "),
**en ce que**, sur le cadre porteur (18) est adapté un élément mobile coulissant, dont la forme est ajustée au guidage (20), notamment une tige (21), et
**en ce que**, par le déplacement de l'élément mobile, en particulier de la tige (21) dans le guidage (20) au moyen d'un premier dispositif de déplacement (22), le cadre porteur (18) est déplaçable linéairement, transversalement par rapport à la surface plane de coupe de sciage avec le premier degré de liberté.

2. Machine-outil selon la revendication 1, **caractérisée en ce que**,
le guidage (20) en dôme comporte une fente latérale (23) et **en ce que** l'élément mobile, en particulier la tige (21) est en prise à travers la fente (23), et/ou
**en ce que** le moyen de déplacement (22), comporte une vis (24) guidée dans un palier, et de préférence un ressort de pré-compression (25), disposée sur une paroi latérale (11', 11 "), de préférence sur l'autre paroi latérale (11 "), dans lequel la vis (24) est en prise dans un filetage avec l'élément mobile, en particulier avec la tige (21).

3. Machine-outil selon l'une des revendications 1 ou 2, **caractérisée en ce que**,
la course de déplacement du cadre porteur (18) est limitée par la première paroi latérale (11') et
que, de préférence, à cet effet, un support (27), s'étendant parallèlement au guidage (20), monté sur la première paroi latérale (11') et pourvu d'une butée d'arrêt (28) pour régler la course du déplacement de l'élément mobile, en particulier de la tige (21), dans le guidage (20).

4. Machine-outil selon l'une des revendications 1 à 3, **caractérisée en ce que**,
la paroi latérale (11') comporte un second guidage (30) en dôme, distant latéralement par rapport au premier guidage (20) et un second élément coulissant, notamment une tige (31), fixé au cadre porteur (18), se déplaçant dans le second guidage (30) avec une forme ajustée.

5. Machine-outil selon l'une des revendications 1 à 4, **caractérisée en ce que**,
d'autres moyens de déplacement (32, 33) de l'unité laser (19) sont prévus dans le cadre porteur (18), et
que les autres moyens de déplacement (32, 33) sont sensiblement disposés parallèlement au premier moyen de déplacement (22), du même côté du capot de protection (11) et actionnables de la même manière que le premier moyen de déplacement (22),
dans lequel, de préférence, chacun des autres moyens de déplacement (32, 33) comporte une vis guidée en rotation par un palier et de préférence un ressort de précontrainte, fixé au cadre porteur (18),
dans lequel la vis est engagée dans un filetage d'une contre-pièce du cadre porteur (18).

6. Machine-outil selon la revendication 2, et, le cas échéant selon l'une des revendications 3 à 5, **caractérisée en ce que**,
la vis (24) des moyens de déplacement (22, 32, 33) est engagée dans un palier circulaire à proximité de leur tête.

7. Machine-outil selon l'une des revendications 1 à 6, **caractérisée en ce que**,
le capot de protection (11) est réalisé en métal léger, en particulier en un alliage à base d'aluminium.
